# EUROPÄISCHE PATENTSCHRIFT

(11) **EP 1 200 290 B1**
(45) Veröffentlichungstag und Bekanntmachung des Hinweises auf die Patenterteilung: **19.05.2004**
(21) Anmeldenummer: 00947996.5
(22) Anmeldetag: 26.07.2000
(51) Int. Cl.: B60R 21/26, C06C 9/00

(54) **SCHNURGASERZEUGER FÜR EINEN GASSACK**
CORD-TYPE GAS GENERATOR FOR AIRBAG
GENERATEUR DE GAZ DU TYPE A CORDEAU POUR UN AIRBAG

(30) Priorität: 02.08.1999 DE 19936285
(43) Veröffentlichungstag der Anmeldung: 02.05.2002
(73) Patentinhaber: Autoliv Development AB, 447 83 Vargarda (SE)
(72) Erfinder: HERRMANN, Günter, D-83620 Feldkirchen (DE)
(74) Vertreter: Müller, Karl-Ernst, Dr., Dipl.-Ing.
(86) Internationale Anmeldenummer: PCT/EP2000/007128
(87) Internationale Veröffentlichungsnummer: WO 2001/008936

(56) Entgegenhaltungen:
- EP-A- 0 995 645
- DE-A- 4 126 743
- DE-A- 4 305 291
- DE-A- 19 613 133
- PATENT ABSTRACTS OF JAPAN vol. 014, no. 285 (M-0987), 20. Juni 1990 (1990-06-20) & JP 02 088343 A (ASAHI CHEM IND CO LTD), 28. März 1990 (1990-03-28)

## Beschreibung

Die Erfindung betrifft einen Schnurgaserzeuger zur Erzeugung von dem Aufblasen eines Gassackes bei einem Kraftfahrzeug-Sicherheitssystem dienenden Gas bestehend aus einem in einer Hülle angeordneten, aus einem gaserzeugenden Material bestehenden Festtreibstoffstrang, einem Anzündmittel und einer Schutzvorrichtung für das Gassackgewebe.

Ein Schnurgaserzeuger mit den vorgenannten Merkmalen ist in der DE 41 26 743 Al beschrieben. Soweit beim Abbrennen des Festtreibstoffstranges so hohe Temperaturen entstehen, dass das gegebenenfalls in unmittelbarer Nähe des Schnurgaserzeugers befindliche Gassackgewebe beschädigt werden kann, ist als Schutzvorrichtung für das Gassackgewebe die den Festtreibstoffstrang aufnehmende und in dem Gassack verlegte Hülle als Hitzeschutzschlauch ausgebildet. Hieraus ergeben sich in nachteiliger Weise besondere Anforderungen an das für den Hitzeschutzschlauch zu verwendende Material.

Aus der DE 196 13 133 Al ist es zusätzlich bekannt, die ein pyrotechnisches Mittel als Festtreibstoff aufnehmende innere Hülle in einem äußeren Rohr als Schutzvorrichtung anzuordnen, wobei zwischen innerer Hülle und äußerem Rohr Abstandselemente zur gegenseitigen Halterung vorgesehen sind. Diese Lösung ist wegen der zusätzlichen Anordnung des äußeren Rohres raum- und materialaufwendig.

Der Erfindung liegt die Aufgabe zugrunde, bei einem Schnurgaserzeuger mit den gattungsgemäßen Merkmalen unter Vermeidung der vorgenannten Nachteile eine zweckmäßige Schutzvorrichtung für das Gassackgewebe zur Verfügung zu stellen.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in Ihrem Grundgedanken vor, dass die Schutzvorrichtung auf der Außenseite der Hülle angeordnet ist und durch die Temperatureinwirkung des abbrennenden Festtreibstoffstranges aktiviert wird.
Mit der Erfindung ist der Vorteil verbunden, dass die Schutzvorrichtung in platzsparender Weise auf der aus einem üblichen Material bestehenden Hülle angeordnet sein kann und erst durch die Temperatureinwirkung des abbrennenden Materials zum Tragen kommt.

Nach einer ersten Ausführungsform der Erfindung besteht die Schutzvorrichtung aus auf der Außenseite der Hülle aufgebrachten und eine Berührung des Gassackgewebes mit der Hülle verhindernden Abstandshaltern. Diese Abstandshalter sind bei nicht-ausgelöstem Schnurgaserzeuger als auf dem Umfang der Hülle anliegende Abstandselemente vorgesehen, die sich unter Temperatureinwirkung von der Hülle lösen und radial abspreizen. Derartige Elemente können beispielsweise aus Bimetall oder einem Memory-Material bestehen. Ein derartiges Memory-Material liegt sowohl in Form eines Metalls als auch in Form eines geeigneten Kunststoffes vor.

In einer alternativen Ausführungsform der Erfindung kann vorgesehen sein, daß ein in auf der Außenseite der Hülle angebrachten Mikrokapseln bevorratetes Kühlmittel vorgesehen ist, das nach Ausführungsbeispielen der Erfindung aus mit Wasserglas gebundenem Hopkalite oder Zeolithe bestehen kann. Im übrigen kann ein solches Kühlmittel sowohl in flüssiger als auch in fester Form eingesetzt werden. Ein Abbrennen des Schnurgasgenerators führt zu einer Zerstörung der Mikrokapseln, so daß das darin gespeicherte Kühlmittel austritt und für eine entsprechende Verminderung der Temperatur sorgt.

Als in Mikrokapseln bevorratetes Kühlmittel kommt nach einem Ausführungsbeispiel der Erfindung auch ein geeignetes Feuerlöschmittel in Betracht.

In der Zeichnung sind Ausführungsbeispiele der Erfindung wiedergegeben, welche nachstehend beschrieben sind. Es zeigen:
- Fig. 1: einen Schnurgaserzeuger mit Schutzvorrichtung in einer geschnittenen Seitenansicht,
- Fig. 2: den Gegenstand der Fig. 1 in einer anderen Ausführungsform.

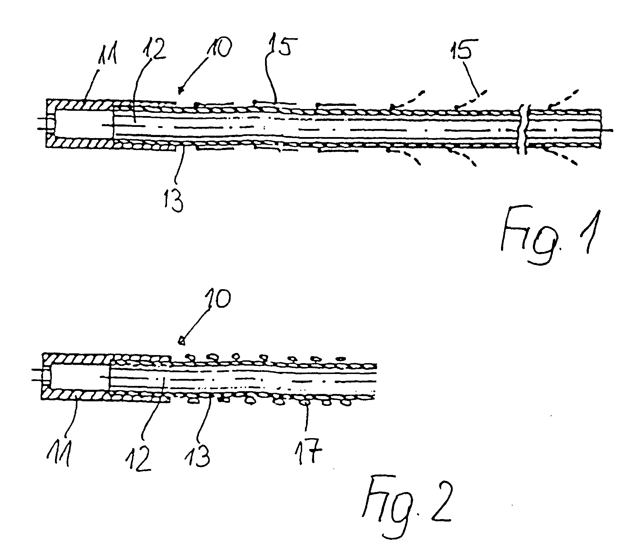

Der in Fig. 1 dargestellte Schnurgaserzeuger 10 besteht aus einem an seinem einen Ende angeordneten Initiator 11, an den ein Festtreibstoffstrang 12 angeschlossen ist, der von einer Hülle 13 umgeben ist. Dabei ist in der linken Hälfte der Darstellung der Zustand vor dem Abbrand des Festtreibstoffstranges 12 dargestellt, während in der rechten Hälfte der Fig. 1 die sich nach dem Abbrand des Festtreibstoffstranges 12 einstellende Anordnung dargestellt ist. Als eine Berührung des Gassackgewebes mit der Hülle 13 ausschließende Schutzvorrichtung sind dabei auf der Außenseite der Hülle 13 Abstandsdrähte 15 als Abstandselemente angebracht, die bei noch nicht ausgelöstem Schnurgaserzeuger an dem äußeren Umfang der Hülle 13 anliegen, so daß sie insbesondere bei der Montage des Schnurgaserzeugers in einem Gassack nicht störend wirken.

Kommt es bei dem Abbrand des Festtreibstoffstranges 12 zu einer entsprechenden Temperatureinwirkung, so spreizen sich die insbesondere aus einem Bimetall bestehenden Abstandsdrähte 15 radial auf und bewirken so die erforderliche Abstandshalterfunktion für das Gassackgewebe.

Bei dem in Fig. 2 dargestellten Ausführungsbeispiel sind, wie in der Fig. 2 angedeutet, auf der Außenseite der Hülle 13 Mikrokapseln 17 vorgesehen, die mit einer Kühlflüssigkeit als Kühlmittel gefüllt sind; bei entsprechender Temperatureinwirkung brechen die Mikrokapseln 17 auf und geben die Kühlflüssigkeit frei.

## Patentansprüche

1. Schnurgaserzeuger (10) zur Erzeugung von dem Aufblasen eines Gassackes bei einem Kraftfahrzeug-Sicherheitssystem dienenden Gas bestehend aus einem in einer Hülle (13) angeordneten, aus einem gaserzeugenden Material bestehenden Festtreibstoffstrang (12),einem Anzündmittel sowie einer Schutzvorrichtung für das Gassackgewebe, **dadurch gekennzeichnet, daß** die Schutzvorrichtung (14, 15, 17) auf der Außenseite der Hülle (13) angeordnet ist und durch die Temperatureinwirkung des abbrennenden Festtreibstoffstranges (12) aktiviert wird.

2. Schnurgaserzeuger nach Anspruch 1, **dadurch gekennzeichnet, daß** die Schutzvorrichtung aus auf der Außenseite der Hülle (13) angebrachten und eine Berührung des Gassackgewebes mit der Hülle (13) verhindernden Abstandshaltern (14, 15) besteht.

3. Schnurgaserzeuger nach Anspruch 2, **dadurch gekennzeichnet, daß** die Abstandshalter aus bei nicht ausgelöstem Schnurgaserzeuger auf dem Umfang der Hülle (13) anliegenden und sich unter Temperatureinfluß radial abspreizenden Abstandselementen (15) bestehen.

4. Schnurgaserzeuger nach Anspruch 3, **dadurch gekennzeichnet, daß** die Abstandselemente (15) aus einem Bimetall bestehen.

5. Schnurgaserzeuger nach Anspruch 4, **dadurch gekennzeichnet, daß** die Abstandselemente (15) aus einem Memory-Material bestehen.

6. Schnurgaserzeuger nach Anspruch 1, **dadurch gekennzeichnet, daß** die Schutzvorrichtung aus einem in auf der Außenseite der Hülle (13) angebrachten und durch die Temperatureinwirkung des abbrennenden Treibstoffstranges (12) zerstörbaren Mikrokapseln (17) bevorrateten Kühlmittel besteht.

7. Schnurgaserzeuger nach Anspruch 6, **dadurch gekennzeichnete daß** das Kühlmittel aus mit Wasserglas gebundendem Hopkalite besteht.

8. Schnurgaserzeuger nach Anspruch 6, **dadurch gekennzeichnet, daß** das Kühlmittel aus mit Wasserglas gebundendem Zeolithe besteht.

9. Schnurgaserzeuger nach Anspruch 6, **dadurch gekennzeichnet, daß** das Kühlmittel aus einem Feuerlöschmittel besteht.

## Claims

1. A cord-type gas generator (10) for generating gas serving to inflate an airbag in a motor vehicle safety system, comprising a solid propellant strand (12) arranged in a sheath (13) and comprising a gas-generating material, an ignition agent and a protective device for the airbag fabric, **characterised in that** the protective device (14, 15, 17) is arranged on the outside of the sheath (13) and is activated by the thermal action of the burning-off solid propellant strand (12).

2. A cord-type gas generator according to claim 1, **characterised in that** the protective device comprises spacers (14, 15) attached to the outside of the sheath (13) and preventing the airbag fabric from touching the sheath (13).

3. A cord-type gas generator according to claim 2, **characterised in that** the spacers comprise spacing elements (15) lying flat against the circumference of the sheath (13) when the cord-type generator has not been triggered and splaying out radially under the action of heat.

4. A cord-type gas generator according to claim 3, **characterised in that** the spacing elements (15) comprise a bimetal.

5. A cord-type gas generator according to claim 4, **characterised in that** the spacing elements (15) comprise a memory material.

6. A cord-type gas generator according to claim 1, **characterised in that** the protective device comprises a coolant stored in microcapsules (17) which are attached to the outside of the sheath (13) and which may be destroyed by the thermal action of the burning-off solid propellant strand (12).

7. A cord-type gas generator according to claim 6, **characterised in that** the coolant comprises Hopkalite bound with water glass.

8. A cord-type gas generator according to claim 6, **characterised in that** the coolant comprises zeolite bound with water glass.

9. A cord-type gas generator according to claim 6, **characterised in that** the coolant comprises a fire-extinguishing agent.

## Revendications

1. Gazogène à cordeau (10) pour la production d'un gaz servant à gonfler un sac de gaz dans un système de sécurité d'un véhicule automobile, constitué d'un cordeau de combustible solide (12) disposé dans une gaine (13) et constitué d'un matériau gazogène, d'un moyen d'allumage ainsi que d'un dispositif de protection pour le tissu de la poche de gaz, **caractérisé en ce que** le dispositif de protection (14, 15, 17) est disposé à l'extérieur de la gaine (13) et est activé par l'action thermique de la combustion du cordeau de combustible solide (12).

2. Gazogène à cordeau selon la revendication 1, **caractérisé en ce que** le dispositif de protection est constitué d'entretoises (14, 15) disposées de manière appropriée à l'extérieur de la gaine (13) et empêchant le contact du tissu de la poche de gaz avec la gaine (13).

3. Gazogène à cordeau selon la revendication 2, **caractérisé en ce que** les entretoises sont constituées d'éléments d'écartement (15) qui se trouvent sur la circonférence de la gaine (13) lorsque le gazogène à cordon n'est pas déclenché et qui se déploient radialement sous l'action de la température.

4. Gazogène à cordeau selon la revendication 3, **caractérisé en ce que** les éléments d'écartement (15) sont bimétalliques.

5. Gazogène à cordeau selon la revendication 3, **caractérisé en ce que** les éléments d'écartement (15) sont constitués d'un matériau à mémoire de forme.

6. Gazogène à cordeau selon la revendication 1; **caractérisé en ce que** le dispositif de protection est constitué d'un moyen de refroidissement contenu dans des microcapsules (17) disposées de manière appropriée à l'extérieur de la gaine (13) et qui se détruisent sous l'effet de la température du cordeau de combustible (12) en combustion.

7. Gazogène à cordeau selon la revendication 6, **caractérisé en ce que** le moyen de refroidissement est constitué d'hopcalite liée à l'aide d'un agglomérant silicaté.

8. Gazogène à cordeau selon la revendication 6, **caractérisé en ce que** le moyen de refroidissement est constitué de zéolite liée à l'aide d'un agglomérant silicaté.

9. Gazogène à cordeau selon la revendication 6, **caractérisé en ce que** le moyen de refroidissement est constitué d'un produit extincteur.
